# FASCICULE DE BREVET EUROPEEN

(11) **EP 3 017 937 B1**
(45) Date de publication et mention de la délivrance du brevet: **18.03.2020**
(21) Numéro de dépôt: 15193648.1
(22) Date de dépôt: 09.11.2015
(51) Int. Cl.: B29C 70/38, B64D 45/02, B29C 70/88

(54) **PROCEDE DE FABRICATION D'UN PANNEAU EN MATERIAU COMPOSITE INTEGRANT UNE PROTECTION CONTRE LA FOUDRE ET PANNEAU EN MATERIAU COMPOSITE FABRIQUE SELON LEDIT PROCEDE**
HERSTELLUNGSVERFAHREN EINES VERBUNDMATERIAL-PANEELS, IN DAS EIN BLITZSCHUTZ INTEGRIERT IST, UND MIT DIESEM VERFAHREN HERGESTELLTES VERBUNDMATERIAL-PANEEL
METHOD FOR MANUFACTURING A PANEL MADE OF A COMPOSITE MATERIAL WITH LIGHTNING PROTECTION AND PANEL MADE OF COMPOSITE MATERIAL MANUFACTURED ACCORDING TO SAID METHOD

(30) Priorité: 10.11.2014 FR 1460864
(43) Date de publication de la demande: 11.05.2016
(73) Titulaire: AIRBUS OPERATIONS (SAS), 31060 Toulouse (FR)
(72) Inventeur: COLLART, Cyrille, 44000 NANTES (FR); MURILLO, Richard, 31130 TOULOUSE (FR)
(74) Mandataire: Fantin, Laurent

(56) Documents cités:
- EP-A1- 0 734 318
- WO-A2-2014/011293
- US-A1- 2012 063 050
- US-A1- 2012 171 477

## Description

L'invention se rapporte à un procédé de fabrication d'un panneau en matériau composite intégrant une protection contre la foudre ainsi qu'à un panneau en matériau composite fabriqué selon ledit procédé.

De manière connue, le fuselage d'un aéronef comprend une juxtaposition de panneaux ou de tôles métalliques. En cas de foudroiement, à la manière d'une cage de Faraday, ce fuselage métallique forme une protection pour les éléments disposés à l'intérieur (notamment les systèmes électriques qui sont raccordés sur le fuselage de l'aéronef) et permet au courant électrique de circuler de la pointe avant jusqu'à la pointe arrière du fuselage.

Pour réduire la masse de l'aéronef, les panneaux du fuselage sont réalisés en matériau composite, notamment en matériau composite renforcé de fibres de carbone de type CFRP ou CRP (pour Carbon Fiber Reinforced Polymer ou Carbon fiber Reinforced Plastic en anglais).

Ces panneaux en matériau composite sont obtenus en déposant sur un moule des plis de fibres de carbone généralement pré-imprégnées sur un support. Une fois tous les plis déposés, le panneau est ensuite soumis à une étape de consolidation ou de polymérisation. En plus du gain de masse, ce type de matériau composite a de bonnes propriétés mécaniques, une absence de corrosion et un bon comportement en fatigue.

Toutefois, contrairement aux panneaux métalliques en alliage d'aluminium, ces panneaux en matériau composite ont une faible conduction électrique.

Par conséquent, il est nécessaire d'ajouter à ces panneaux en matériau composite une protection contre la foudre dite LSP (pour Lightning Strike Protection en anglais).

Cette protection contre la foudre est généralement mise en place avant la consolidation ou la polymérisation, soit directement sur le moule avant la dépose des plis de fibres, soit après la dépose des plis de fibres.

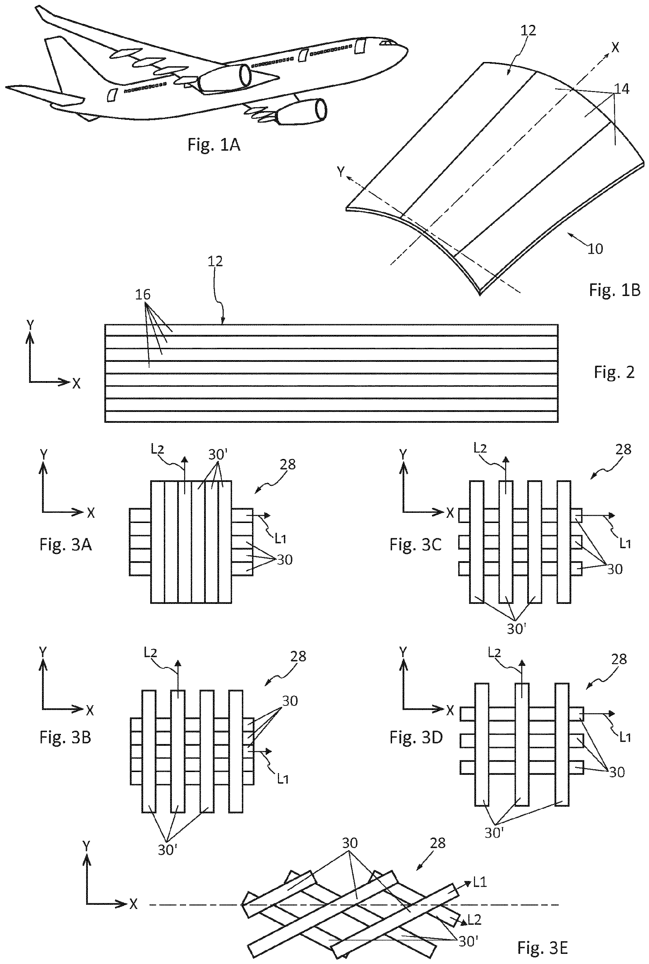

Comme illustré sur la figure 1B, un panneau de fuselage 10 comprend un premier rayon de courbure selon une première direction X et un second rayon de courbure selon une deuxième direction Y.

Pour la suite de la description, la direction X correspond à la direction longitudinale de l'aéronef (qui va de l'avant à l'arrière) et la direction Y correspond à une direction transversale, perpendiculaire à la direction longitudinale X.

Ce panneau 10 en matériau composite comprend une protection contre la foudre 12.

Selon un mode de réalisation, une protection contre la foudre comprend une couche conductrice (un grillage, un revêtement epoxydique conducteur ou une feuille métallique), une couche support et un film de résine.

Selon un mode opératoire, les plis de fibres de carbone sont mis en place sur un premier poste. En suivant, la protection contre la foudre est mise en place sur un deuxième poste, en juxtaposant manuellement des bandes 14 de protection contre la foudre. Ces bandes sont disposées dans un seul sens et ont des bords qui se chevauchent pour assurer la continuité électrique.

Les bandes 14 sont découpées dans des rouleaux et ont une largeur qui peut atteindre 900 mm.

Ce mode opératoire permet de maîtriser la mise en place des bandes sur une surface comprenant un rayon de courbure, voire deux rayons de courbure, comme un panneau d'un fuselage d'aéronef.

Pour augmenter la productivité, une solution consiste à automatiser la dépose des bandes de protection contre la foudre.

Une première solution consiste à utiliser une machine automatique de drapage de type ATL (pour Automated tape laying en anglais). Ce type de machine permet de déposer des bandes dont la largeur est comprise entre 150 et 300 mm. Ce type de machine permet de garantir le chevauchement des bords des bandes afin d'assurer la continuité électrique. Cependant, il ne peut être utilisé que pour déposer des bandes sur un support plat, ce qui n'est pas le cas d'un panneau de fuselage. Même si on pourrait envisager de déposer à plat les plis de fibres et les bandes de protection contre la foudre puis ensuite de déformer l'ensemble pour obtenir un panneau courbe, la continuité électrique entre les bandes ne pourrait plus être garantie après la déformation.

Une deuxième solution consiste à utiliser une machine de placement de fibre de type AFP (pour automated fiber placement en anglais). Ce type de machine permet de pouvoir déposer des bandes sur des surfaces courbes comme un panneau de fuselage. Cependant, ce type de machine ne permet de déposer que des bandes dont la largeur n'excède pas 2 pouces, soit environ 5 cm.

Comme illustré sur la figure 2, la protection contre la foudre comprend des bandes 16 déposées sur le panneau de fuselage 10 qui sont parallèles entre elles et agencées selon la direction X. Ces bandes 16 ont une largeur n'excédant pas 2 pouces pour pouvoir être mises en place sur une surface courbe de manière automatisée. Dans ce cas, on constate que la conduction électrique selon la direction X est différente de la conduction électrique selon la direction Y (avec un rapport de 10 lorsque la conduction est exprimée en mOhm par unité de surface). L'importance de la différence entre ces deux valeurs réduit l'efficacité de la protection contre la foudre. De plus, elle ne garantit pas la protection des systèmes électriques présents dans un aéronef dont le fuselage est réalisé de la sorte.

Le document US20120171477A1 décrit un procédé de fabrication d'un panneau en matériau composite intégrant une protection contre la foudre, lequel comprend des bandes avec une couche conductrice, ledit procédé comprenant une étape de dépose desdites bandes de manière automatisée, lesdites bandes ayant une largeur inférieure à 20 mm et étant réparties en une première série de bandes parallèles entre elles.

La présente invention vise à remédier aux inconvénients de l'art antérieur en proposant une solution qui permet de déposer de manière automatisée les bandes de protection contre la foudre tout en ayant une conduction électrique dans toutes les directions du plan du panneau suffisante pour conduire l'électricité générée lors d'un impact de foudre.

A cet effet, l'invention a pour objet un procédé de fabrication d'un panneau en matériau composite intégrant une protection contre la foudre qui comprend des bandes avec une couche conductrice, ledit procédé étant caractérisé en ce qu'il comprend une étape de dépose desdites bandes de manière automatisée, lesdites bandes ayant une largeur inférieure à 20 mm et étant réparties en une première série de bandes parallèles entre elles et déposées selon une première direction de dépose et une deuxième série de bandes parallèles entre elles et déposées selon une deuxième direction de dépose sécante à la première direction de dépose.

Ce procédé permet de pouvoir déposer les bandes de manière automatisée, en utilisant par exemple une machine de placement de fibres de type AFP, sur une surface comprenant au moins un rayon de courbure, tout en ayant une conduction électrique dans toutes les directions conforme à la réglementation aéronautique.

De préférence, la première direction de dépose et la deuxième direction de dépose définissent des motifs en forme de parallélogramme.

Selon certaines configurations, pour au moins une des deux séries de bandes, les bandes sont disposées bord à bord.

Selon d'autres configurations, les bandes des deux séries de bandes sont espacées.

Selon un mode de réalisation privilégié, les bandes de la première série sont espacées d'une distance égale à leur largeur et les bandes de la deuxième série sont espacées d'une distance égale à quatre fois leur largeur. Cette solution permet d'obtenir un excellent compromis entre la conduction électrique et la masse de la protection contre la foudre.

Selon une variante, la première direction de dépose et la deuxième direction de dépose sont perpendiculaires et l'une des directions de dépose est parallèle à une direction longitudinale de l'aéronef.

Selon une autre variante, la première direction de dépose et la deuxième direction de dépose définissent des motifs en forme de losange dont une diagonale est parallèle à une direction longitudinale de l'aéronef.

De préférence, le procédé de fabrication d'un panneau de fuselage d'un aéronef comprend une première étape de dépose de fibres sur une surface de dépose convexe d'un outillage et une seconde étape de dépose des bandes de protection contre la foudre sur la dernière couche de fibres sur le même outillage.

L'invention a également pour objet un panneau en matériau composite intégrant une protection contre la foudre qui comprend des bandes avec une couche conductrice. Ce panneau se caractérise en ce que les bandes ont une largeur inférieure à 20 mm et sont réparties en une première série de bandes parallèles entre elles et déposées selon une première direction de dépose et une deuxième série de bandes parallèles entre elles et déposées selon une deuxième direction de dépose sécante à la première direction de dépose.

De préférence, la première direction de dépose et la deuxième direction de dépose définissent des motifs en forme de parallélogramme.

Selon certaines configurations, pour au moins une des deux séries de bandes, les bandes sont disposées bord à bord.

Selon d'autres configurations, les bandes des deux séries de bandes sont espacées.

Selon un mode de réalisation privilégié, les bandes de la première série sont espacées d'une distance égale à leur largeur et les bandes de la deuxième série sont espacées d'une distance égale à quatre fois leur largeur.

Selon une variante, la première direction de dépose et la deuxième direction de dépose sont perpendiculaires et l'une des directions de dépose est parallèle à une direction longitudinale de l'aéronef.

Selon une autre variante, la première direction de dépose et la deuxième direction de dépose définissent des motifs en forme de losange dont une diagonale est parallèle à une direction longitudinale de l'aéronef.

D'autres caractéristiques et avantages ressortiront de la description qui va suivre de l'invention, description donnée à titre d'exemple uniquement, en regard des dessins annexés sur lesquels :
- La figure 1A est une vue en perspective d'un aéronef,
- La figure 1B est une vue en perspective d'un panneau d'un fuselage d'aéronef,
- La figure 2 est une vue de dessus d'une partie d'un panneau d'un fuselage recouvert de bandes de protection contre la foudre selon une configuration de l'art antérieur,
- Les figures 3A à 3E sont des vues de dessus de parties de panneaux de fuselage recouverts de bandes de protection contre la foudre selon différentes configurations qui illustrent l'invention,
- Les figures 4A à 4D sont des photographies illustrant les surfaces respectivement des parties de panneaux illustrés sur les figures 3A à 3D après un impact de foudre, et
- La figure 5 est une vue de dessus d'une partie de panneau de fuselage recouvert de bandes de protection contre la foudre qui illustre une configuration privilégiée de l'invention,
- La figure 6 est une vue en perspective d'un panneau de fuselage d'aéronef recouvert d'une protection contre la foudre selon la configuration illustrée sur la figure 5,
- La figure 7 est une coupe du panneau de la figure 6.

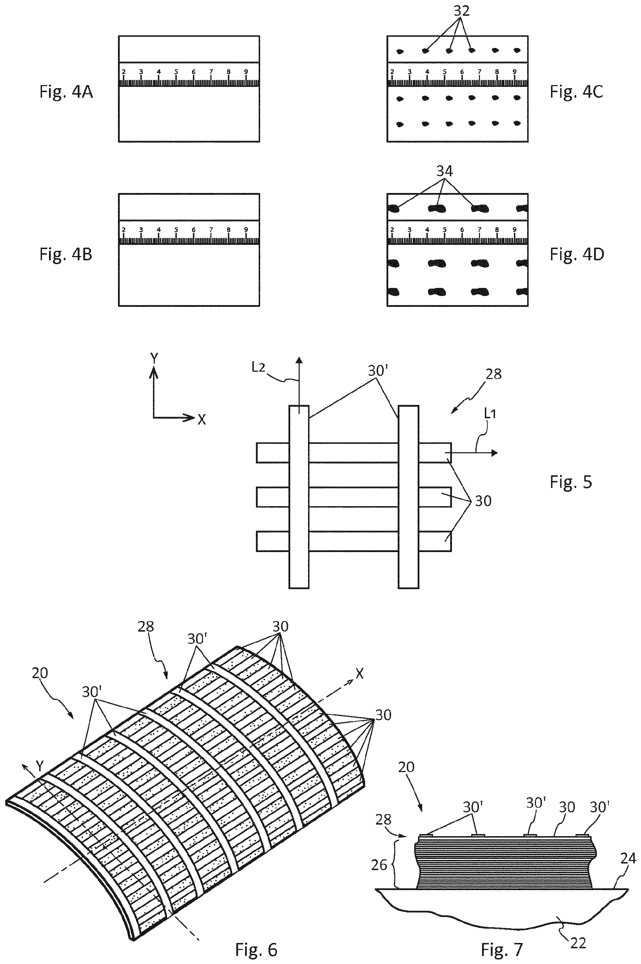

Comme illustré sur les figures 6 et 7, un panneau 20 en matériau composite comprend des fibres noyées dans une matrice de résine.

Selon les cas, la résine est une résine thermodurcissable ou thermoplastique. Les fibres peuvent être en verre, en carbone ou autre.

Selon un mode de réalisation, le panneau 20 en matériau composite est de type CFRP (pour Carbon Fiber Reinforced Polymer en anglais) et comprend des fibres en carbone.

Selon un mode opératoire, des plis de fibres pré-imprégnées de résine sont déposés sur un support plat de manière à obtenir une préforme de fibres. En suivant, cette préforme est déformée sur un outillage qui comprend une surface dont la géométrie est identique à celle du panneau que l'on souhaite obtenir.

Selon un autre mode opératoire, une machine de placement de fibre de type AFP est utilisée pour déposer des mèches de fibres sur un outillage 22 (visible sur la figure 7) qui comprend une surface de dépose 24 dont la géométrie est identique à celle du panneau 20 que l'on souhaite obtenir.

Une mèche de fibres comprend au moins une fibre. Généralement, elle comprend une pluralité de fibres agencées sous forme d'une fine bande avec une largeur inférieure à 20 mm. Selon une configuration, une mèche a une largeur de 3,2 mm, 6,32 mm ou 12,7 mm.

Bien entendu, l'invention n'est pas limitée à ces deux modes opératoires pour déposer les fibres. De préférence, les fibres sont regroupées par couches qui sont superposées les unes sur les autres de manière à obtenir une préforme de fibres 26, une couche comprenant un pli ou des plis juxtaposés ou des mèches juxtaposées.

Le panneau 20 en matériau composite comprend une protection contre la foudre 28.

Selon les variantes, la protection contre la foudre 28 est rapportée sur la dernière couche de fibres, directement sur la surface de dépose avant la mise en place des couches de fibres ou intercalée entre deux couches de fibres.

Selon un mode de réalisation privilégié, les fibres sont déposées sur une surface de dépose convexe qui correspond à la surface intérieure du panneau du fuselage (orientée vers l'intérieur de l'aéronef) et la protection contre la foudre 28 est mise en place sur la dernière couche de fibres. Ainsi, la protection contre la foudre 28 est placée au niveau de la surface extérieure du fuselage.

Selon un autre mode de réalisation, la protection contre la foudre 28 est mise en place avant la première couche de fibres afin d'être positionnée sur la surface interne du fuselage.

La protection contre la foudre 28 comprend au moins une couche conductrice comme par exemple un grillage métallique, une feuille de métal scindée ou non, une feuille de métal étiré.

Selon un mode de réalisation, la protection contre la foudre 28 comprend une couche conductrice, une couche support et un film de résine. Ces éléments ne sont pas plus détaillés car ils sont identiques à ceux des protections contre la foudre de l'art antérieur.

La protection contre la foudre comprend une pluralité de bandes 30, 30'. Chaque bande comprend deux bords parallèles et espacés d'une distance qui correspond à la largeur de la bande.

Selon l'invention, chaque bande a une largeur inférieure à 20 mm. De préférence, les bandes 30, 30' ont une largeur de l'ordre de 3,2 mm, 6,32 mm ou 12,7 mm.

Cette largeur permet de pouvoir déposer les bandes de manière automatisée, en utilisant une machine de placement de fibres de type AFP, sur une surface comprenant au moins un rayon de courbure, voire deux rayons de courbure, comme un panneau de fuselage ou de voilure d'un aéronef.

Chaque bande 30, 30' comprend au moins une couche conductrice. De préférence, elle comprend la même superposition de couches et de films que la protection contre la foudre. Selon une caractéristique de l'invention, illustrée sur les figures 3A à 3E, la protection contre la foudre 28 comprend une première série de bandes 30 parallèles entre elles et déposées selon une première direction de dépose L1 et une deuxième série de bandes 30' parallèles entre elles et déposées selon une deuxième direction de dépose L2 sécante (et donc non parallèle) à la première direction de dépose L1.

La première direction de dépose L1 est parallèle aux bords des bandes 30 de la première série.

La deuxième direction de dépose L2 est parallèle aux bords des bandes 30' de la deuxième série.

Cette configuration permet d'obtenir une conduction électrique inférieure au seuil fixé par la réglementation aéronautique dans toutes les directions du panneau.

Selon une variante illustrée sur les figures 3A à 3D, la première direction de dépose L1 et la deuxième direction de dépose L2 sont perpendiculaires.

Avantageusement, la première direction de dépose L1 est parallèle à la direction longitudinale X de l'aéronef et la deuxième direction de dépose L2 est parallèle à la direction transversale Y.

Dans le cas d'un panneau de fuselage d'un avion, la première direction de dépose L1 des bandes 30 de la première série est parallèle au premier rayon de courbure du panneau et la deuxième direction de dépose L2 des bandes 30' de la deuxième série est parallèle au deuxième rayon de courbure du panneau. Cet agencement simplifie la mise en place des bandes.

Selon une première configuration illustrée sur la figure 3A, les bandes 30 de la première série sont disposées bord à bord et ne sont pas espacées et les bandes 30' de la deuxième série sont disposées bord à bord et ne sont pas espacées.

Selon une deuxième configuration illustrée sur la figure 3B, les bandes 30 de la première série sont disposées bord à bord et ne sont pas espacées et les bandes 30' de la deuxième série sont espacées et ne sont pas disposées bord à bord. Selon cette deuxième configuration, les bandes 30' de la deuxième série sont espacées d'une distance égale à leur largeur.

Selon une troisième configuration illustrée sur la figure 3C, les bandes 30 de la première série et les bandes 30' de la deuxième série sont espacées et ne sont pas disposées bord à bord. Selon cette troisième configuration, les bandes 30 de la première série et les bandes 30' de la deuxième série sont espacées d'une distance égale à leur largeur.

Selon une quatrième configuration illustrée sur la figure 3D, les bandes 30 de la première série et les bandes 30' de la deuxième série sont espacées et ne sont pas disposées bord à bord. Selon cette quatrième configuration, les bandes 30 de la première série sont espacées d'une distance égale à leur largeur et les bandes 30' de la deuxième série sont espacées d'une distance égale à deux fois leur largeur.

Sur les figures 4A à 4D, on a représenté une surface protégée par la protection contre la foudre dans chacune des configurations décrites ci-dessus.

Pour les première et deuxième configurations, on constate que l'ensemble de la surface du panneau est protégée.

Pour la troisième configuration, on constate des zones non protégées 32 qui ont un diamètre de l'ordre de 3 à 4 mm pour les plus grosses. Pour la quatrième configuration, on constate des zones non protégées 34 qui ont un diamètre de l'ordre de 10 mm pour les plus grosses. Ainsi, la zone à risque d'endommagement par un impact de foudre sur un tel panneau a une surface inférieure à 4000 mm².

Les bandes 30 et 30' des deux séries ont une épaisseur faible, inférieure à 0,3 mm, de préférence de l'ordre de 0,1 mm.

Ainsi, dans le cas où les bandes 30 et/ou 30' d'au moins une série sont espacées, les défauts de surface sont acceptables pour la finition des panneaux du fuselage et l'application d'une peinture.

Selon une configuration privilégiée illustrée sur la figure 5, les bandes 30 de la première série et les bandes 30' de la deuxième série sont espacées et ne sont pas disposées bord à bord. Selon cette configuration privilégiée, les bandes 30 de la première série sont espacées d'une distance égale à leur largeur et les bandes 30' de la deuxième série sont espacées d'une distance égale à quatre fois leur largeur. De préférence, les bandes 30 de la première série sont déposées selon une première direction de dépose parallèle à la direction longitudinale X de l'aéronef et les bandes 30' de la deuxième série sont déposées selon une deuxième direction de dépose parallèle à la direction transversale Y (ou perpendiculaire à la première direction de dépose). A titre d'exemple, chaque bande 30, 30' a une épaisseur de 18 µm et elle est imprégnée d'une résine ayant une épaisseur de 45 µm.

Cette configuration permet d'obtenir le meilleur compromis entre la conduction électrique et la masse de la protection contre la foudre.

Ainsi, selon cette configuration privilégiée, on obtient une conduction électrique de 2 mOhm par unité de surface selon la direction longitudinale X, 5 mOhm par unité de surface selon la direction Y (au lieu de respectivement 1 et 4 mOhm par unité de surface dans le cas d'une large bande déposée manuellement selon l'art antérieur) et une masse de 160 g/m² (au lieu de 273 g/m² dans le cas d'une large bande déposée manuellement selon l'art antérieur). Selon une autre variante illustrée sur la figure 3E, les bandes 30 de la première série sont orientées selon une direction L1 et les bandes 30' de la seconde série sont orientées selon une direction L2 de manière à définir des motifs en forme de losange. De préférence, une diagonale des losanges est parallèle à la direction longitudinale X de l'aéronef.

De préférence, les bandes 30 de la première série sont orientées selon une direction L1 et les bandes 30' de la seconde série sont orientées selon une direction L2 de manière à définir des motifs en forme de parallélogramme. A la manière des configurations illustrées sur les figures 3A, 3B, 3C, 3D et 5, pour les configurations en losange, les bandes de chaque série peuvent être disposées bord à bord ou plus ou moins espacées.

Selon un mode opératoire, les bandes 30, 30' des deux séries sont mises en place en utilisant une machine de placement de fibre de type AFP.

Les bandes 30, 30' sont dévidées à partir d'une bobine située sur un axe support et amenées jusqu'à une tête de dépose de la machine de placement de fibres.

Avantageusement, les mèches de fibres et les bandes sont mises en place sur le même outillage avec la même machine de placement de fibres. Cette solution permet de rationaliser le procédé de fabrication du panneau. Ainsi, il n'est plus nécessaire de déplacer la préforme de fibres d'un premier outillage jusqu'à un deuxième outillage prévu pour la mise en place de la protection contre la foudre.

De plus, en raison du faible écart entre les valeurs de conduction électrique dans chacune des directions du plan du panneau, dans les différentes configurations de dépose des plis de fibres du procédé selon l'invention, la protection contre la foudre est plus efficace.

Après la mise en place des fibres et de la protection contre la foudre, l'ensemble est consolidé ou polymérisé de manière à obtenir un panneau en matériau composite qui intègre une protection contre la foudre.

## Revendications

1. Procédé de fabrication d'un panneau en matériau composite intégrant une protection contre la foudre qui comprend des bandes (30, 30') avec une couche conductrice, le procédé comprenant une étape de dépose desdites bandes de manière automatisée, lesdites bandes (30, 30') ayant une largeur inférieure à 20 mm et étant réparties en une première série de bandes (30) parallèles entre elles et déposées selon une première direction de dépose (L1) et une deuxième série de bandes (30') parallèles entre elles et déposées selon une deuxième direction de dépose (L2) sécante à la première direction de dépose (L1).

2. Procédé selon la revendication 1, **caractérisé en ce que** la première direction de dépose (L1) et la deuxième direction de dépose (L2) définissent des motifs en forme de parallélogramme.

3. Procédé selon la revendication 1 ou 2, **caractérisé en ce que** pour au moins une des deux séries de bandes, les bandes (30, 30') sont disposées bord à bord.

4. Procédé selon la revendication 1 ou 2, **caractérisé en ce que** les bandes (30, 30') des deux séries de bandes sont espacées.

5. Procédé selon la revendication 4, **caractérisé en ce que** les bandes (30) de la première série sont espacées d'une distance égale à leur largeur et les bandes (30') de la deuxième série sont espacées d'une distance égale à quatre fois leur largeur.

6. Procédé de fabrication d'un panneau de fuselage d'un aéronef selon l'une des revendications précédentes, **caractérisé en ce que** la première direction de dépose (L1) et la deuxième direction de dépose (L2) sont perpendiculaires et l'une des directions de dépose (L1, L2) est parallèle à une direction longitudinale (X) de l'aéronef.

7. Procédé de fabrication d'un panneau de fuselage d'un aéronef selon l'une des revendications 1 à 5, **caractérisé en ce que** la première direction de dépose (L1) et la deuxième direction de dépose (L2) définissent des motifs en forme de losange dont une diagonale est parallèle à une direction longitudinale (X) de l'aéronef.

8. Procédé de fabrication d'un panneau de fuselage d'un aéronef selon l'une des revendications précédentes, **caractérisé en ce qu'**il comprend une première étape de dépose de fibres sur une surface de dépose (24) convexe d'un outillage (22) et une seconde étape de dépose des bandes de protection contre la foudre (30, 30') sur la dernière couche de fibres sur le même outillage.

9. Panneau en matériau composite intégrant une protection contre la foudre qui comprend des bandes (30, 30') avec une couche conductrice, dans lequel les bandes (30, 30') ont une largeur inférieure à 20 mm et sont réparties en une première série de bandes (30) parallèles entre elles et déposées selon une première direction de dépose (L1) et une deuxième série de bandes (30') parallèles entre elles et déposées selon une deuxième direction de dépose (L2) sécante à la première direction de dépose (L1).

10. Panneau en matériau composite selon la revendication 9, **caractérisé en ce que** la première direction de dépose (L1) et la deuxième direction de dépose (L2) définissent des motifs en forme de parallélogramme.

11. Panneau en matériau composite selon la revendication 9 ou 10, **caractérisé en ce que** pour au moins une des deux séries de bandes, les bandes (30, 30') sont disposées bord à bord.

12. Panneau en matériau composite selon la revendication 9 ou 10, **caractérisé en ce que** les bandes (30, 30') des deux séries de bandes sont espacées.

13. Panneau en matériau composite selon la revendication 12, **caractérisé en ce que** les bandes (30) de la première série sont espacées d'une distance égale à leur largeur et les bandes (30') de la deuxième série sont espacées d'une distance égale à quatre fois leur largeur.

14. Panneau en matériau composite selon l'une des revendications 9 à 13, **caractérisé en ce que** la première direction de dépose (L1) et la deuxième direction de dépose (L2) sont perpendiculaires et l'une des directions de dépose (L1, L2) est parallèle à une direction longitudinale (X) de l'aéronef.

15. Panneau en matériau composite selon l'une des revendications 9 à 13, **caractérisé en ce que** la première direction de dépose (L1) et la deuxième direction de dépose (L2) définissent des motifs en forme de losange dont une diagonale est parallèle à une direction longitudinale (X) de l'aéronef.

## Patentansprüche

1. Verfahren zur Herstellung eines Paneels aus Verbundmaterial mit integriertem Blitzschutz, das Bänder (30, 30') mit einer leitenden Schicht aufweist, wobei das Verfahren einen Verfahrensschritt umfasst, in dem die Bänder auf automatisierte Weise abgelegt werden, wobei die Bänder (30, 30') eine Breite kleiner 20 mm haben und in einer ersten Reihe von untereinander parallelen und in eine erste Ablagerichtung (L1) abgelegten Bändern (30) verteilt sind und in einer zweiten Reihe von Bändern (30') verteilt sind, die untereinander parallel sind und in eine zweite Ablagerichtung (L2) abgelegt sind, die die erste Ablagerichtung (L1) schneidet.

2. Verfahren nach Anspruch 1, **dadurch gekennzeichnet, dass** die erste Ablagerichtung (L1) und die zweite Ablagerichtung (L2) parallelogrammförmige Muster bilden.

3. Verfahren nach Anspruch 1 oder 2, **dadurch gekennzeichnet, dass** bei wenigstens einer der beiden Reihen von Bändern die Bänder (30, 30') auf Stoß angeordnet sind.

4. Verfahren nach Anspruch 1 oder 2, **dadurch gekennzeichnet, dass** die Bänder (30, 30') der beiden Reihen von Bändern im Abstand angeordnet sind.

5. Verfahren nach Anspruch 4, **dadurch gekennzeichnet, dass** sich die Bänder (30) der ersten Reihe in einem Abstand befinden, der gleich ihrer Breite ist, und dass sich die Bänder (30') der zweiten Reihe in einem Abstand befinden, der gleich dem Vierfachen ihrer Breite ist.

6. Verfahren zur Herstellung eines Paneels für den Rumpf eines Luftfahrzeugs nach einem der vorhergehenden Ansprüche, **dadurch gekennzeichnet, dass** die erste Ablagerichtung (L1) und die zweite Ablagerichtung (L2) zueinander rechtwinklig sind und dass eine der Ablagerichtungen (L1, L2) parallel zu einer Längsrichtung (X) des Luftfahrzeugs ist.

7. Verfahren zur Herstellung eines Paneels für den Rumpf eines Luftfahrzeugs nach einem der Ansprüche 1 bis 5, **dadurch gekennzeichnet, dass** die erste Ablagerichtung (L1) und die zweite Ablagerichtung (L2) Muster in Gestalt einer Raute bilden, deren eine Diagonale parallel zu einer Längsrichtung (X) des Luftfahrzeugs ist.

8. Verfahren zur Herstellung eines Paneels für den Rumpf eines Luftfahrzeugs nach einem der vorhergehenden Ansprüche, **dadurch gekennzeichnet, dass** dieses einen ersten Verfahrensschritt umfasst, in dem die Fasern auf einer konvexen Ablagefläche (24) eines Werkzeugs (22) abgelegt werden, und einen zweiten Verfahrensschritt umfasst, in dem die Bänder mit Blitzschutz (30, 30') auf der letzten Faserschicht auf demselben Werkzeug abgelegt werden.

9. Paneel aus Verbundmaterial mit integriertem Blitzschutz, das Bänder (30, 30') mit einer leitenden Schicht aufweist, in dem die Bänder (30, 30') eine Breite kleiner 20 mm haben und in einer ersten Reihe von untereinander parallelen und in eine erste Ablagerichtung (L1) abgelegten Bändern (30) verteilt sind und in eine zweite Reihe von Bändern (30') verteilt sind, die untereinander parallel sind und in eine zweite Ablagerichtung (L2) abgelegt sind, die die erste Ablagerichtung (L1) schneidet.

10. Paneel aus Verbundmaterial nach Anspruch 9, **dadurch gekennzeichnet, dass** die erste Ablagerichtung (L1) und die zweite Ablagerichtung (L2) parallelogrammförmige Muster bilden.

11. Paneel aus Verbundmaterial nach Anspruch 9 oder 10, **dadurch gekennzeichnet, dass** bei wenigstens einer der beiden Reihen von Bändern die Bänder (30, 30') auf Stoß angeordnet sind.

12. Paneel aus Verbundmaterial nach Anspruch 9 oder 10, **dadurch gekennzeichnet, dass** die Bänder (30, 30') der beiden Reihen von Bändern im Abstand angeordnet sind.

13. Paneel aus Verbundmaterial nach Anspruch 12, **dadurch gekennzeichnet, dass** sich die Bänder (30) der ersten Reihe in einem Abstand befinden, der gleich ihrer Breite ist, und dass die Bänder (30') der zweiten Reihe sich in einem Abstand befinden, der gleich dem Vierfachen ihrer Breite ist.

14. Paneel aus Verbundmaterial nach einem der Ansprüche 9 bis 13, **dadurch gekennzeichnet, dass** die erste Ablagerichtung (L1) und die zweite Ablagerichtung (L2) zueinander rechtwinklig sind und dass eine der Ablagerichtungen (L1, L2) parallel zu einer Längsrichtung (X) des Luftfahrzeugs ist.

15. Paneel aus Verbundmaterial nach einem der Ansprüche 9 bis 13, **dadurch gekennzeichnet, dass** die erste Ablagerichtung (L1) und die zweite Ablagerichtung (L2) Muster in der Gestalt einer Raute bilden, deren eine Diagonale parallel zu einer Längsrichtung (X) des Luftfahrzeugs ist.

## Claims

1. Method for manufacturing a panel made of composite material incorporating a lightning protection means which comprises strips (30, 30') with a conductive layer, the method comprising a step of laying said strips in an automated manner, said strips (30, 30') having a width of less than 20 mm and being distributed in a first set of mutually parallel strips (30) that are laid in a first laying direction (L1) and a second set of mutually parallel strips (30') that are laid in a second laying direction (L2) that intersects the first laying direction (L1).

2. Method according to Claim 1, **characterized in that** the first laying direction (L1) and the second laying direction (L2) define patterns in the form of a parallelogram.

3. Method according to Claim 1 or 2, **characterized in that**, for at least one of the two sets of strips, the strips (30, 30') are disposed edge-to-edge.

4. Method according to Claim 1 or 2, **characterized in that** the strips (30, 30') of the two sets of strips are spaced apart.

5. Method according to Claim 4, **characterized in that** the strips (30) of the first set are spaced apart by a distance equal to their width and the strips (30') of the second set are spaced apart by a distance equal to four times their width.

6. Method for manufacturing a fuselage panel of an aircraft according to one of the preceding claims, **characterized in that** the first laying direction (L1) and the second laying direction (L2) are perpendicular and one of the laying directions (L1, L2) is parallel to a longitudinal direction (X) of the aircraft.

7. Method for manufacturing a fuselage panel of an aircraft according to one of Claims 1 to 5, **characterized in that** the first laying direction (L1) and the second laying direction (L2) define patterns in the form of a rhombus, one diagonal of which is parallel to a longitudinal direction (X) of the aircraft.

8. Method for manufacturing a fuselage panel of an aircraft according to one of the preceding claims, **characterized in that** it comprises a first step of laying fibres on a convex laying surface (24) of a tool (22) and a second step of laying lightning protection strips (30, 30') on the final layer of fibres on the same tool.

9. Panel made of composite material incorporating a lightning protection means which comprises strips (30, 30') with a conductive layer, wherein the strips (30, 30') have a width of less than 20 mm and are distributed in a first set of mutually parallel strips (30) that are laid in a first laying direction (L1) and a second set of mutually parallel strips (30') that are laid in a second laying direction (L2) that intersects the first laying direction (L1).

10. Panel made of composite material according to Claim 9, **characterized in that** the first laying direction (L1) and the second laying direction (L2) define patterns in the form of a parallelogram.

11. Panel made of composite material according to Claim 9 or 10, **characterized in that**, for at least one of the two sets of strips, the strips (30, 30') are disposed edge-to-edge.

12. Panel made of composite material according to Claim 9 or 10, **characterized in that** the strips (30, 30') of the two sets of strips are spaced apart.

13. Panel made of composite material according to Claim 12, **characterized in that** the strips (30) of the first set are spaced apart by a distance equal to their width and the strips (30') of the second set are spaced apart by a distance equal to four times their width.

14. Panel made of composite material according to one of Claims 9 to 13, **characterized in that** the first laying direction (L1) and the second laying direction (L2) are perpendicular and one of the laying directions (L1, L2) is parallel to a longitudinal direction (X) of the aircraft.

15. Panel made of composite material according to one of Claims 9 to 13, **characterized in that** the first laying direction (L1) and the second laying direction (L2) define patterns in the form of a rhombus, one diagonal of which is parallel to a longitudinal direction (X) of the aircraft.
